# EUROPEAN PATENT APPLICATION

(11) **EP 3 379 718 A1**
(43) Date of publication of application: **26.09.2018**
(21) Application number: 18161944.6
(22) Date of filing: 15.03.2018
(51) Int. Cl.: H02P 21/00, H02P 27/04, H02P 27/08

(54) **INVERTER APPARATUS, AIR CONDITIONER, METHOD OF CONTROLLING INVERTER APPARATUS, AND PROGRAM**

(30) Priority: 24.03.2017 JP 2017059755
(71) Applicant: MITSUBISHI HEAVY INDUSTRIES THERMAL SYSTEMS, LTD., Tokyo 108-8215 (JP)
(72) Inventor: Sunohara, Tetsu, Tokyo 108-8215 (JP); Sumito, Kiyotaka, Tokyo 108-8215 (JP); Shimizu, Kenji, Tokyo 108-8215 (JP); Watanabe, Takamasa, Tokyo 108-8215 (JP); Komiya, Shinichi, Tokyo 108-8215 (JP)
(74) Representative: Henkel, Breuer & Partner

(57) **Abstract**

Provided is an inverter apparatus (1) of a 3-phase motor which is configured to perform v/f control, the inverter apparatus including: a voltage command unit (12) which is configured to generate a voltage command on the basis of a speed command of the 3-phase motor; a correction command unit (18) which is configured to generate a correction command by adding a command of stopping a PWM control pulse signal to the voltage command in a period of at least a part of a zero voltage region of the voltage command; and an inverter main circuit (20) which is configured to switch a switching element group with a pulse signal generated on the basis of the correction command and thereby convert a DC voltage into a 3-phase AC voltage.

## Description

### BACKGROUND OF THE INVENTION

### Field of the Invention

The present invention relates to an inverter apparatus, an air conditioner, a method of controlling the inverter apparatus, and a program.

### Description of Related Art

In an air conditioner (air conditioning unit), an inverter apparatus which generates a load (motor)-driving AC power for driving a motor of a compressor freely is mainly mounted. A well-known inverter apparatus temporarily converts 3-phase AC voltage, which is input from a commercial power supply (for example, AC 200 V 3-phase AC power supply), into a DC voltage through a rectifier circuit (converter), and converts the DC voltage into a desired motor driving AC power by the inverter apparatus.

As such an inverter apparatus, there is an apparatus which is configured to perform output control by the v/f control method or an apparatus which is configured to perform output control by a vector control method.

For example, Patent Document 1 discloses an inverter apparatus which generates a command voltage from a detected motor current, as a vector control system.

### [Patent Documents]

[Patent Document 1] Japanese Patent No. 5675567

### SUMMARY OF THE INVENTION

In Patent Document 1, the inverter apparatus stops the PWM signal in the vicinity of a current zero crossing. However, since the inverter apparatus of Patent Document 1 generates a voltage command from the detected motor current, the stop control of the PWM signal is performed after detecting the current zero crossing. Therefore, the stopping of the PWM signal is delayed.

An object of the present invention is to provide an inverter apparatus, an air conditioner, a method of controlling the inverter apparatus, and a program for reducing the delay of the PWM signal stop.

According to a first aspect, there is provided an inverter apparatus of a 3-phase motor which is configured to perform v/f control, the inverter apparatus including: a voltage command unit which is configured to generate a voltage command on the basis of a speed command of the 3-phase motor; a correction command unit which is configured to generate a correction command by adding a command of stopping a PWM control pulse signal to the voltage command in a period of at least a part of a zero voltage region of the voltage command; and an inverter main circuit which is configured to switch a switching element group with a pulse signal generated on the basis of the correction command and thereby convert a DC voltage into a 3-phase AC voltage.

According to this aspect, since the inverter apparatus adds a command of stopping the PWM control pulse signal to the generated voltage command in the v/f control, it is possible to stop the PWM pulse signal at an arbitrary timing. Therefore, the delay of the PWM signal stop is suppressed.

According to the inverter apparatus of a second aspect, in the first aspect, the switching element group includes pairs of switching elements of an upper arm and a lower arm in association with each phase of the 3-phase AC voltage, respectively, and as the PWM control, the control of turning on at least one of the switching element of the upper arm and the switching element of the lower arm over the entire region of the plurality of cycles of the PWM cycle among the large regions of each phase voltage of the 3-phase AC voltage is performed.

According to this aspect, since the inverter apparatus turns on (fully-on) at least one of the switching element of the upper arm and the switching element of the lower arm over a plurality of PWM cycles, respectively, in a region in which each phase voltage of the 3-phase AC voltage is large, the switching loss can be reduced.

Further, according to the inverter apparatus of a third aspect, in the first or second aspect, the switching element group has an SJ-MOSFET or a wide-gap semiconductor as a switching element.

According to this aspect, since the switching element of the inverter apparatus has low loss, the power loss in the switching element can be reduced.

Further, in the inverter apparatus according to any one of first to third aspects, the inverter apparatus of a fourth aspect further includes a phase calculation unit which is configured to integrate an inverter output frequency generated from the speed command and calculate the phase, wherein the correction command unit is configured to generate the correction command on the basis of the phase.

According to this aspect, since the inverter apparatus generates the output voltage phase from the speed command, it is possible to stop the PWM control pulse signal with the phase matching the speed command.

An air conditioner according to a fifth aspect of the invention includes the inverter apparatus according to any one of the first to fourth aspects, and a motor rotationally driven by the 3-phase AC voltage.

According to a sixth aspect of the present invention, there is provided a method of controlling an inverter apparatus of a 3-phase motor which is configured to perform v/f control, the method including: a voltage command generation step of generating a voltage command, using a speed command of the 3-phase motor; a correction command generation step of generating a correction command by adding a command of stopping a PWM control pulse signal to the voltage command in a period of at least a part of a zero voltage region of the voltage command; and an inverse conversion step of switching a switching element group by the pulse signal generated on the basis of the correction command and thereby converting a DC voltage into a 3-phase AC voltage.

According to a seventh aspect, there is provided a program which is configured to cause a computer of an inverter apparatus including an inverter main circuit configured to convert a DC voltage into a 3-phase AC voltage by switching a switching element group with a pulse signal generated on the basis of a correction command in an inverter apparatus of a 3-phase motor which is configured to perform v/f control, to function as a voltage command unit which is configured to generate a voltage command using a speed command of the 3-phase motor, and a correction command unit which is configured to generate the correction command by adding a command of stopping the PWM control pulse signal to the voltage command in a period of at least a part of a zero voltage region of the voltage command.

According to an aspect of the present invention, it is possible to reduce the delay of the PWM signal stop.

### BRIEF DESCRIPTION OF THE DRAWINGS

FIG. 1 is an overall view of an inverter apparatus according to a first embodiment of the present invention.
FIG. 2 is a diagram showing a functional configuration of a control device according to a first embodiment of the present invention.
FIG. 3 is a diagram showing a function of PWM control.
FIG. 4 is a diagram showing a waveform of a corrected AC voltage command according to the first embodiment of the present invention.
FIG. 5 is a diagram showing a relationship between a waveform of a corrected AC voltage command and a gate signal in the first embodiment according to the present invention.
FIG. 6 is a diagram showing a relationship between a waveform of a current of each phase flowing in a motor and a gate signal in the first embodiment according to the present invention.
FIG. 7 is a diagram showing a relationship between a waveform of a current of each phase flowing through a motor and a gate signal in a reference example.
FIG. 8 is a diagram showing PWM stop control in the first embodiment according to the present invention.
FIG 9 is a diagram showing the PWM stop control in a reference example.
FIG. 10 is an overall view of an inverter apparatus in a second embodiment according to the present invention.
FIG 11 is a diagram showing a relationship between a waveform of a corrected AC voltage command and a gate signal in a modified example according to the present invention.
FIG. 12 is a flowchart of a control method of the control device in an embodiment according to the present invention.

### DETAILED DESCRIPTION OF THE INVENTION

Hereinafter, various embodiments of the present invention will be described with reference to the drawings.

### <First embodiment>

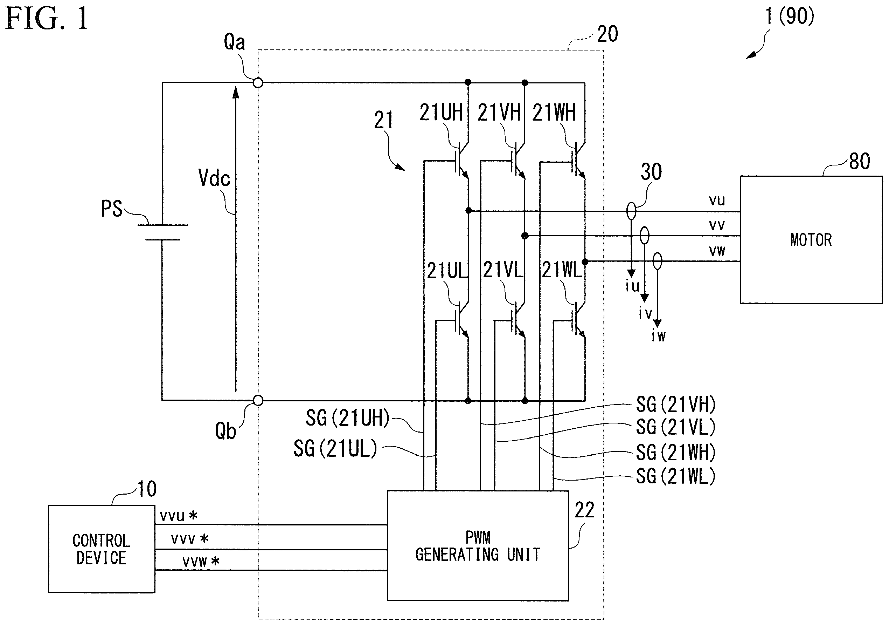

Hereinafter, an inverter apparatus according to the first embodiment will be described in detail with reference to FIGS. 1 to 9.

### (Circuit configuration of inverter apparatus)

FIG. 1 is a diagram showing a circuit configuration of the inverter apparatus according to an embodiment.

The inverter apparatus 1 is mounted in an outdoor unit of an air conditioner (air conditioning unit) 90. The inverter apparatus 1 outputs a load driving AC voltage (3-phase AC voltage) depending on a separately input speed command to a 3-phase AC motor (motor 80) for driving a compressor of the outdoor unit. The inverter apparatus 1 rotates the 3-phase AC motor (motor 80) as a load at a desired rotation speed, on the basis of the load driving AC voltage.

The inverter apparatus 1 includes a control device 10, an inverter main circuit 20, and a motor current detection unit 30.

The inverter apparatus 1 converts the DC voltage Vdc, which is supplied from the DC power source PS, into a 3-phase AC voltage of a U-phase AC voltage, a V-phase AC voltage, and a W-phase AC voltage, which are load driving AC voltages for rotationally driving the motor 80.

The motor current detection unit 30 is provided in each wiring of the 3-phase connected to the motor 80 from the inverter apparatus 1. The motor current detection unit 30 detects the respective currents iu, iv, and iw of the U-phase, the V-phase, and the W-phase flowing through the motor 80 in association with the applied voltages (AC voltages vu, vv, and vw) of the 3-phases which are output from the inverter apparatus 1 to the motor 80, and reports the detection results of the respective currents iu, iv, and iw to the control device 10.

### (Inverter main circuit)

The inverter main circuit 20 includes a switching element group 21, a positive electrode DC terminal Qa, a negative electrode DC terminal Qb, and a PWM generating unit 22.

The positive electrode DC terminal Qa and the negative electrode DC terminal Qb are terminals to which the DC voltage Vdc is input.

The positive electrode DC terminal Qa and the negative electrode DC terminal Qb are connected to the positive electrode and the negative electrode of the DC power source PS, respectively.

The switching element group 21 includes three pairs of two switching elements connected in series between the DC voltage Vdc. Here, the switching element is, for example, a power transistor such as an insulated gate bipolar transistor (IGBT). Each pair of the series-connected switching elements is provided to correspond to each of the 3-phases for rotationally driving the 3-phase AC motor (motor 80).

As shown in FIG. 1, the switching element group 21 has a pair of switching element 21UH of an upper arm and switching element 21UL of a lower arm connected in series from the positive electrode DC terminal Qa, to which a DC voltage Vdc is input, to the negative electrode DC terminal Qb.

Further, the switching element group 21 has a pair of switching element 21 VH of the upper arm and switching element 21VL of the lower arm connected in series from the positive electrode DC terminal Qa to the negative electrode DC terminal Qb.

Further, the switching element group 21 has a pair of switching element 21WH of the upper arm and switching element 21WL of the lower arm connected in series from the positive electrode DC terminal Qa to the negative electrode DC terminal Qb.

The pair of switching element 21UH of the upper arm and switching element 21UL of the lower arm is switched by a gate signal of a PWM generating unit 22 to be described below to generate a U-phase AC voltage vu. The pair of switching element 21UH of the upper arm and switching element 21UL of the lower arm is alternately switched in a region excluding a peak voltage region RGP and a zero voltage region RGZ which will be described below.

Similarly, the pair of switching element 21VH of the upper arm and switching element 21VL of the lower arm is switched by a gate signal of the PWM generating unit 22 to generate a V-phase AC voltage vv. The pair of switching element 21VH of the upper arm and switching element 21VL of the lower arm is alternately switched in a region excluding the peak voltage region RGP and the zero voltage region RGZ which will be described below.

Similarly, the pair of switching element 21WH of the upper arm and switching element 21WL of the lower arm is switched by a gate signal of the PWM generating unit 22 to generate a W-phase AC voltage vw. The pair of switching element 21WH of the upper arm and switching element 21WL of the lower arm is alternately switched in a region excluding a peak voltage region RGP and a zero voltage region RGZ which will be described below.

The PWM generating unit 22 generates a gate signal for driving the switching element group 21 in association with a correction command (to be described below) received from the control device 10, and turns on and off the switching element group 21.

In the present embodiment, the PWM generating unit 22 acquires corrected AC voltage commands vvu*, vvv*, and vvw* from a correction command unit 18. The PWM generating unit 22 generates PWM-controlled pulse signals (hereinafter also referred to as "PWM signals") at an on-duty cycle proportional to the voltages at the respective timings of the respective waveforms of the corrected AC voltage commands vvu*, vvv*, and vvw* thus acquired.

Specifically, the PWM generating unit 22 outputs a gate signal SG (21UH), a gate signal SG (21UL), a gate signal SG (21VH), a gate signal SG (21VL), a gate signal SG (21WH), and a gate signal SG (21WL) to each gate of the switching element 21UH, the switching element 21UL, the switching element 21VH, the switching element 21VL, the switching element 21WH, and the switching element 21WL to be described later, respectively.

The PWM generating unit 22 generates the gate signal SG (21UH) and the gate signal SG (21UL) on the basis of the corrected AC voltage command vvu*.

Similarly, the PWM generating unit 22 generates the gate signal SG (21VH) and the gate signal SG (21VL) on the basis of the corrected AC voltage command vvv*.

Similarly, the PWM generating unit 22 generates the gate signal SG (21WH) and the gate signal SG (21WL) on the basis of the corrected AC voltage command vvw*.

### (Control device)

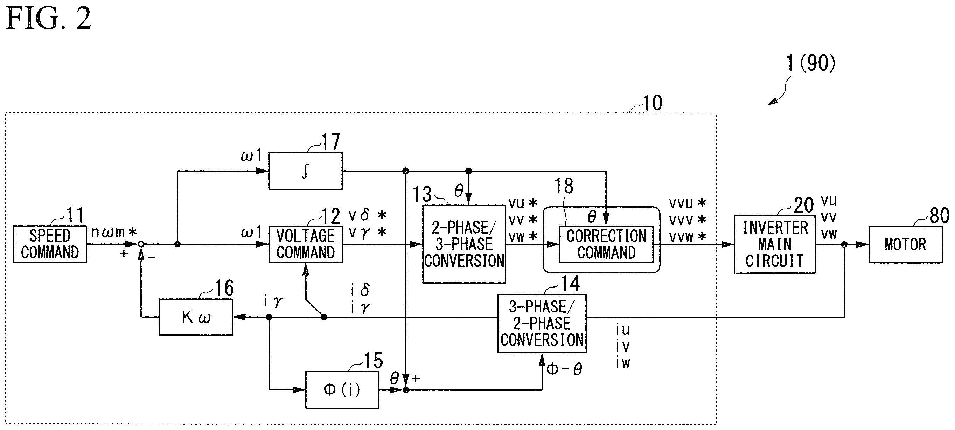

As shown in FIG. 2, the control device 10 includes a speed command unit 11, a voltage command unit 12, a 2-phase/3-phase conversion unit 13, a 3-phase/2-phase conversion unit 14, a power factor angle setting unit 15, a speed correction unit 16, a phase calculation unit 17, and the correction command unit 18.

In the present embodiment, a computer system is caused to function as the control device 10 by executing a program to be described below.

The speed command unit 11 outputs a speed command nωm* for rotating the motor 80 at a desired rotation speed ω (n is the number of pole pairs of the motor 80). The speed command nωm* is subjected to the correction processing by the speed correction unit 16, and becomes a new speed command ω1. The speed command ω1 is input to the voltage command unit 12 and the phase calculation unit 17, respectively.

The voltage command unit 12 receives an input of the inverter output frequency ω1 which is a new speed command, and generates a voltage command substantially proportional to the inverter output frequency ω1 in two axes (δ-axis, γ-axis) of the rotation orthogonal coordinate system.

In the present embodiment, the speed command unit 11 generates and outputs a δ-axis voltage command vδ* and a γ-axis voltage command vγ* as the voltage commands.

The 2-phase/3-phase conversion unit 13 converts coordinates of the voltage command, which is output from the voltage command unit 12, into AC voltage commands vu*, vv*, and vw* corresponding to each of the 3-phase AC voltages which are output from the inverter main circuit 20. The 2-phase/3-phase conversion unit 13 performs the coordinate conversion according to the phase θ obtained from a phase calculation unit 17 to be described below.

The 3-phase/2-phase conversion unit 14 acquires the currents iu, iv, and iw detected by the motor current detection unit 30. The 3-phase/2-phase conversion unit 14 performs the coordinate conversion of the acquired currents iu, iv, and iw into a δ-axis current component iδ (excitation current component) and a γ-axis current component iy (torque current component) which are current components of the two axes (δ axis, γ axis) forming the motor current I. The converted δ-axis current component iδ and the γ-axis current component iγ are fed back to the voltage command unit 12.

The power factor angle setting unit 15 sets the phase difference φ and is used for adjustment of the power factor. In the present embodiment, the adjustment of the power factor is performed by calculating the phase difference φ in association with the γ-axis current component iγ. When it is not necessary to adjust the power factor with respect to the phase θ which is the phase of the motor application voltage (AC voltages vu, vv, and vw) of the motor 80 by the calculated phase difference φ, the power factor angle setting unit 15 may not be provided.

The speed correction unit 16 multiplies the γ-axis current component iγ by the gain Kω. The γ-axis current component iγ multiplied by the gain Kω is negatively fed back to the speed command nωm* and is used for correction of the speed command nωm* so that the motor 80 stably operates. When it is not necessary to stabilize the motor 80, the speed correction unit 16 may not be provided.

The phase calculation unit 17 integrates the inverter output frequency ω1, calculates the phase θ, and outputs the phase θ to each of the 2-phase/3-phase conversion unit 13 and the correction command unit 18.

The correction command unit 18 obtains the AC voltage commands vu*, vv*, and vw* from the 2-phase/3-phase conversion unit 13.

As will be described below, the correction command unit 18 generates a correction command in which a command for stopping the PWM signal in the zero voltage region of the AC voltage commands vu*, vv*, and vw* is added to the voltage command, and controls the inverter main circuit 20.

Since the specific description of the control device 10 is described in Japanese Patent No. 4,764,124, except for the correction command unit 18, a detailed description thereof will be omitted.

Also, when feedback control is not required and open control is performed, the 3-phase/2-phase conversion unit 14, the power factor angle setting unit 15, and the speed correction unit 16 may be eliminated.

### (Correction command unit)

In the present embodiment, the correction command unit 18 generates the corrected AC voltage commands vvu*, vvv*, and vvw* from the AC voltage commands vu*, vv*, and vw*, respectively, and outputs the corrected AC voltage commands to the PWM generating unit 22.

The corrected AC voltage commands vvu*, vvv*, and vvw* are generated as follows:
The correction command unit 18 acquires voltage waveforms approximate to the respective waveforms of the desired 3-phase AC voltages vu, vv, and vw, as the AC voltage commands vu*, vv*, and vw*.

The correction command unit 18 corrects the voltage waveforms of the acquired AC voltage commands vu*, vv*, and vw* so that control of a two-arm type to be described below is performed and the PWM pulse is stopped in the zero voltage region of each voltage waveform.

In the present embodiment, the correction command unit 18 corrects the voltage waveforms of the AC voltage commands vu*, vv*, and vw* to a waveform J2 to be described below as the corrected AC voltage commands vvu*, vvv*, and vvw*.

### (Two-arm type control)

First, the two-arm type control in this embodiment will be described.

When the AC voltage commands vu*, vv*, and vw* generated from the voltage command (δ-axis voltage command vδ*, and γ-axis voltage command vγ*) and the phase θ are sine waves, respectively, if the inverter apparatus 1 performs the PWM control in the state of the sine wave, the switching loss in the switching element group 21 is large.

In order to suppress the switching loss in the switching element group 21, control (two-arm type control) of turning on each of the switching elements all over the regions of the plural cycles of the PWM cycle is performed.

That is, as the two-arm type control, the inverter apparatus 1 performs the control of turning on (fully-on) each of the switching elements 21UH, 21VH, and 21WH of the upper arm, and the switching elements 21UL, 21VL, and 21WL of the lower arm all over the regions of the plural cycles of the PWM cycle, in the region in which (the absolute value of) each phase voltage of the 3-phase AC voltage is large.

Therefore, the control device 10 corrects the voltage command such that the on-duty cycle of the PWM signal is 100% (fully-on) over a predetermined electrical angle centered on the peak voltage (positive peak voltage and negative peak voltage) of the sine wave with a large switching loss.

In this embodiment, in order to perform the two-arm type control, the correction command unit 18 raises the voltage over a predetermined electrical angle centered on the peaks of the respective voltage waveforms of the AC voltage commands vu*, vv*, and vw *, and corrects the voltage waveform so that the duty cycle of the PWM signal becomes 100%. The reason for correcting to such a waveform is as follows.

The PWM generating unit 22 changes the voltage which is output from the inverter main circuit 20, by changing the ratio (the duty cycle of the PWM signal) of the on-pulse width to the pulse cycle of the signal that turns on and off the switching element group 21.

When a predetermined voltage waveform is output to the inverter main circuit 20, the PWM generating unit 22 modulates the duty cycle of the PWM signal so as to be proportional to the voltage at each moment of the voltage waveform to be generated, and supplies the predetermined voltage waveform to the switching element group 21.

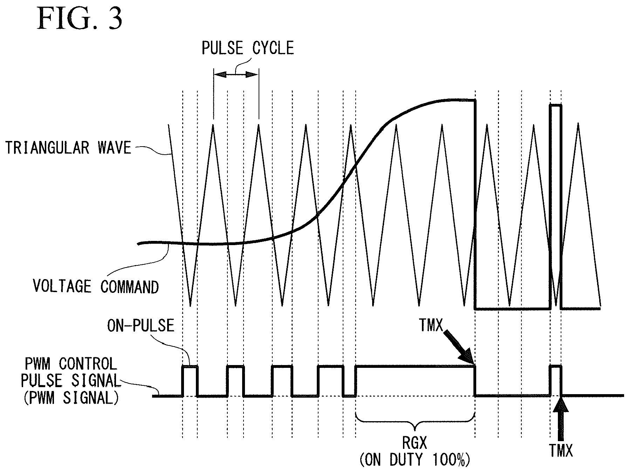

As shown in the example of FIG. 3, in the PWM generating unit 22, the duty cycle of the PWM signal is determined by comparing the voltage waveform of the triangular wave (or a saw-toothed wave) as a reference with the voltage waveform of the voltage command obtained from the control device 10.

Therefore, if the voltage command voltage is modulated, the duty cycle of the PWM signal can be modulated. In FIG. 3, when the voltage command voltage is larger than the voltage of the triangular wave, an on-pulse is obtained.

Furthermore, when the voltage of the voltage command is larger than the maximum voltage of the triangular wave over a plurality of pulse cycles, the on-duty cycle of the PWM signal becomes 100% (fully-on), and the on-signal can be obtained in the entire region (region RGX).

In this way, when the voltage command voltage is raised so that the voltage of the command voltage becomes larger than the voltage of the triangular wave over a plurality of pulse cycles, the control device 10 can set the on-duty cycle of the PWM signal to 100% (fully-on) in the raised region, and the ON signal can be obtained in the entire region.

Therefore, in the present embodiment, the control device 10 corrects the voltage waveforms of the AC voltage commands vu*, vv*, and vw* to the voltage waveform raised to a voltage larger than the maximum voltage of the triangular wave, and can perform the two-arm type control.

### (Pulse signal stop control)

As described above, in the present embodiment, in order to perform the two-arm type control first, the AC voltage commands vu*, vv*, and vw* are corrected to the AC voltage command with the raised voltage at an electrical angle (peak voltage region RGP) of 60° centered on the peak voltage of the sine wave.

If the DC voltage Vdc is converted into the AC voltages vu, vv, and vw with the raised AC voltage command as is, the respective line voltages of the AC voltages vu, vv, and vw become a distorted waveform as compared to the sine wave. For this reason, the AC voltage commands vu*, vv*, and vw* need to be further shaped so that the respective line voltages of the AC voltages vu, vv, and vw have a waveform approximate to a sine wave.

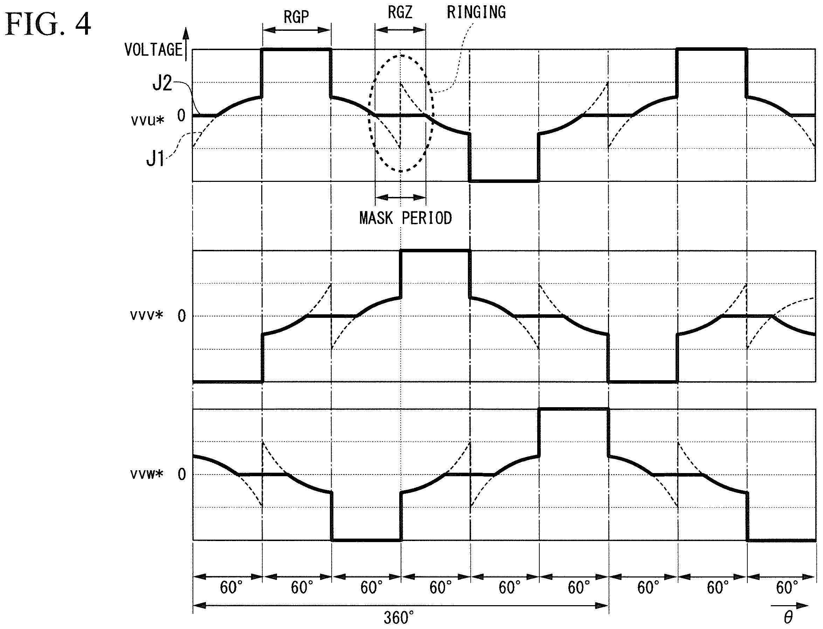

For example, as shown in FIG. 4, a case where the voltage of the peak voltage region RGP is raised to be a rectangular wave will be described. In FIG. 4, a horizontal axis represents the phase θ and a vertical axis represents the voltage.

In order to set each line voltage of the AC voltages vu, vv, and vw to a sine wave, the AC voltage command needs to be shaped into a waveform having ringing in the zero voltage region RGZ as the raised compensation. Here, the "zero voltage region RGZ" is a region from the voltage 0 to 0 including two peaks of ringing and two tails.

Specifically, if the AC voltage commands vu*, vv*, and vw* are shaped into the waveform J1 indicated by the broken line in FIG. 4, the respective line voltages of the AC voltages vu, vv, and vw can be set to a sine waveform.

However, when the inverter main circuit 20 is driven by the waveform J1 having ringing in the zero voltage region RGZ, the switching loss of each switching element in the zero voltage region RGZ increases.

Therefore, in this embodiment, the AC voltage commands vu*, vv*, and vw* are corrected to the waveform J2 indicated by the solid line in FIG. 4, as the corrected AC voltage commands vvu*, vvv*, and vvw*, respectively. That is, the AC voltage commands vu*, vv*, and vw* are corrected to the waveform J2 in which the PWM signal can be stopped in the zero voltage region RGZ.

Specifically, the AC voltage commands vu*, vv*, and vw* are corrected to the waveform J2 having the mask period at which the voltage is set as 0 in the entire zero voltage region RGZ, as the corrected AC voltage commands vvu*, vvv*, and vvw*, respectively.

As described above, the duty cycle of the PWM signal is determined by comparing the voltage waveform of the reference triangular wave with the voltage waveform of the voltage command obtained from the control device 10. By setting the voltage of the voltage command waveform to be smaller than the voltage of the minimum value of the voltage waveform of the triangular wave as shown at the timing TMX of FIG. 3, the control device 10 can stop the PWM signal at an arbitrary timing. In this embodiment, if the voltage command voltage to be output to the PWM generating unit 22 is set to 0, the voltage can be set to a voltage that is at least smaller than the minimum value of the voltage waveform of the triangular wave.

Therefore, if the AC voltage commands vu*, vv*, and vw* are corrected to the waveform J2, since the PWM signal stops in the zero voltage region RGZ, the switching loss in the zero voltage region RGZ is suppressed.

When the AC voltage commands vu*, vv*, and vw* are corrected to the waveform J2, the respective line voltages of the AC voltages vu, vv, and vw slightly collapse from the sine wave, but the respective line voltages are maintained as a waveform approximate to a sine wave.

Therefore, the correction command unit 18 corrects the AC voltage commands vu*, vv*, and vw* to the waveform J2 as the corrected AC voltage commands vvu*, vvv*, and vvw*.

The corrected AC voltage commands vvu*, vvv*, and vvw* corrected to the waveform J2 are converted into PWM signals in the PWM generating unit 22. Further, the PWM generating unit 22 generates each gate signal in synchronization with the PWM signal.

As an example, a relationship between the corrected AC voltage command vvu* and the gate signal SG (21UH) will be described.

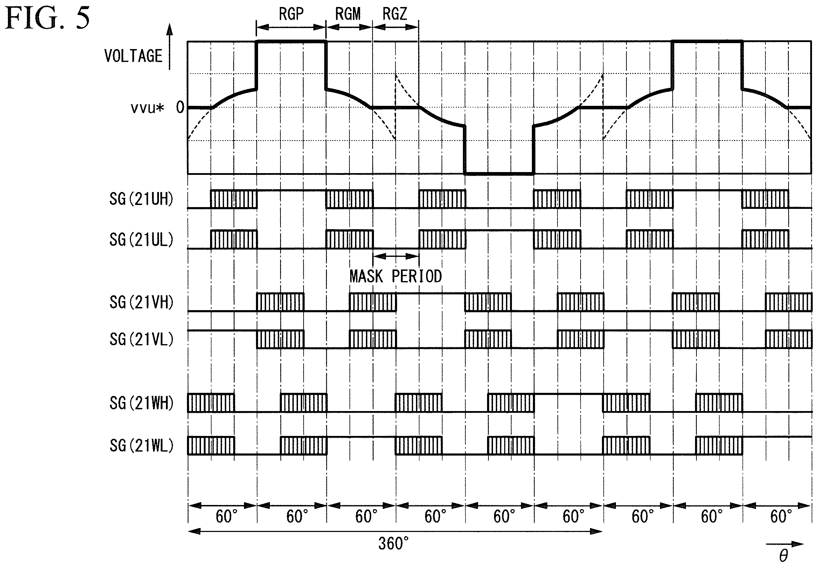

As shown in FIG. 5, the corrected AC voltage command vvu* is converted into the gate signal SG (21UH). In FIG. 5, the horizontal axis represents the phase θ and the vertical axis represents the voltage.

In the peak voltage region RGP, the on-duty cycle of the gate signal SG (21UH) becomes 100% (fully-on), and an ON signal is obtained in the entire region.

Conversely, the gate signal SG (21UL) becomes an OFF signal (PWM pulse stop) in the entire region.

In the intermediate voltage region RGM between the peak voltage region RGP and the zero voltage region RGZ, the gate signal SG (21UH) becomes a pulse train of on-duty cycle proportional to the voltage of the corrected AC voltage command vvu*.

The gate signal SG (21UL) becomes a pulse train of a reverse pattern of the gate signal SG (21UH). That is, when the gate signal SG (21UH) is an on-pulse, the gate signal SG (21UL) becomes an off-pulse, and when the gate signal SG (21UH) is an off-pulse, the gate signal SG (21UL) becomes an on-pulse.

In the zero voltage region RGZ, the on-duty cycle of the gate signal SG (21UH) becomes 0% (fully-off), and the gate signal SG (21UH) becomes the OFF signal in the entire region. Therefore, in the zero voltage region RGZ, a period (mask period) during which the PWM signal is stopped is obtained.

Similarly to the gate signal SG (21UH), the gate signal SG (21UL) becomes an OFF signal (PWM pulse stop) in the entire region.

As shown in FIG. 5, the gate signal SG (21VH) and the gate signal SG (21VL) have a phase delayed by 120° from the gate signal SG (21UH) and the gate signal SG (21UL), respectively.

As shown in FIG. 5, the gate signal SG (21WH) and the gate signal SG (21WL) have a phase delayed by 240° (phase advanced by 120°) from the gate signal SG (21UH) and the gate signal SG (21UL), respectively.

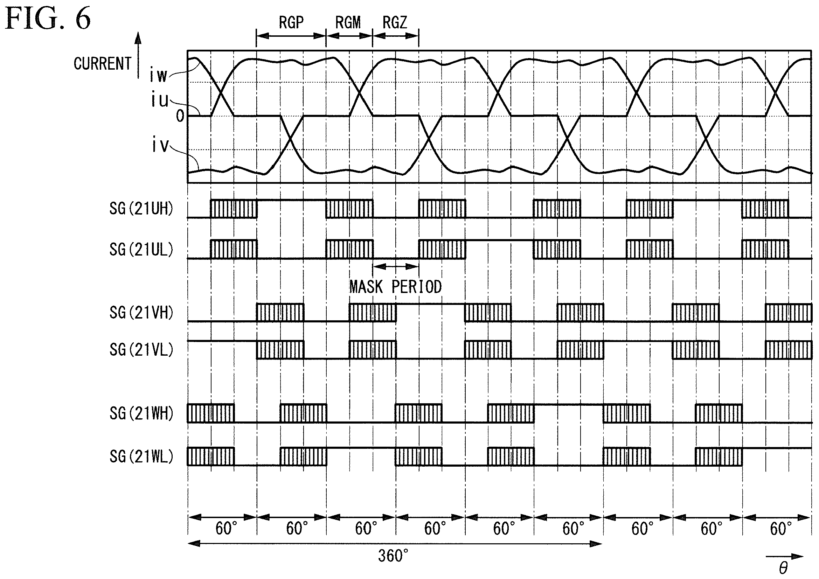

FIG. 6 shows a U-phase current iu, a V-phase current iv, and a W-phase current iw flowing through the motor 80, when controlled by the respective gate signals of FIG. 5.

In the peak voltage region RGP, a large current iu including the maximum flows in the entire region in association with the ON signal of the gate signal SG (21UH).

In the intermediate voltage range RGM, the current iu gradually decreases in association with the decrease in the duty cycle of the gate signal SG (21UH). There is a state in which the current iu does not substantially flow between the intermediate voltage region RGM and the zero voltage region RGZ.

In the zero voltage region RGZ, a state in which the current iu does not substantially flow in the entire region of the mask period is maintained in association with the gate signal SG (21UH) and the gate signal SG (21UL) OFF signal.

Regarding the V-phase, a similar current iv flows in accordance with the phases of the gate signal SG (21VH) and the gate signal SG (21VL), as shown in FIG. 6.

Regarding the W-phase, a similar current iw flows in accordance with the phases of the gate signal SG (21WH) and the gate signal SG (21WL) as shown in FIG. 6.

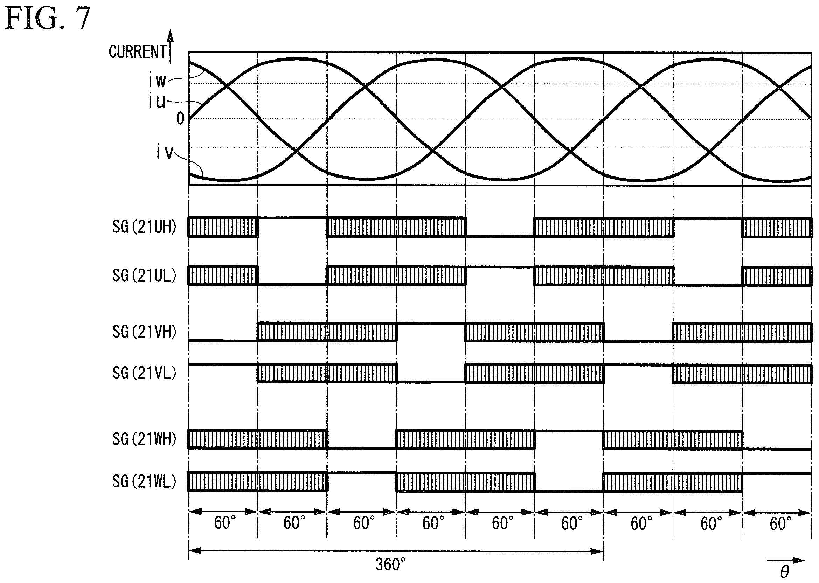

As a reference example, the U-phase current iu, the V-phase current iv, and the W-phase current iw flowing through the motor 80 when the waveform J1 is input to the PWM generating unit 22 as the corrected AC voltage commands vvu*, vvv*, and vvw* are shown in FIG. 7.

The currents iu, iv, and iw of the present embodiment shown in FIG. 6 have waveforms slightly collapsed from the sine wave as compared with FIG. 7, but they are substantially smooth AC waveforms and can drive the 3-phase motor.

In FIG. 6 and FIG. 7, the horizontal axis represents the phase θ, and the vertical axis represents the current.

### (Action and effect)

Since the inverter apparatus 1 stops the pulse signal of PWM in the zero voltage region, the switching loss can be reduced.

Furthermore, as described below, because there is no delay at the time of switching to the PWM stop control, the inverter apparatus 1 can suppress the distortion of the motor output current waveform.

The inverter apparatus 1 adds a command of stopping the PWM signal to the voltage command, and controls the turning-off of the PWM pulse signal.

As described above, since the duty cycle of the PWM signal is determined by comparing the voltage waveform of the triangular wave with the voltage waveform of the voltage command obtained from the control device 10, it is possible to stop the PWM signal at an arbitrary timing.

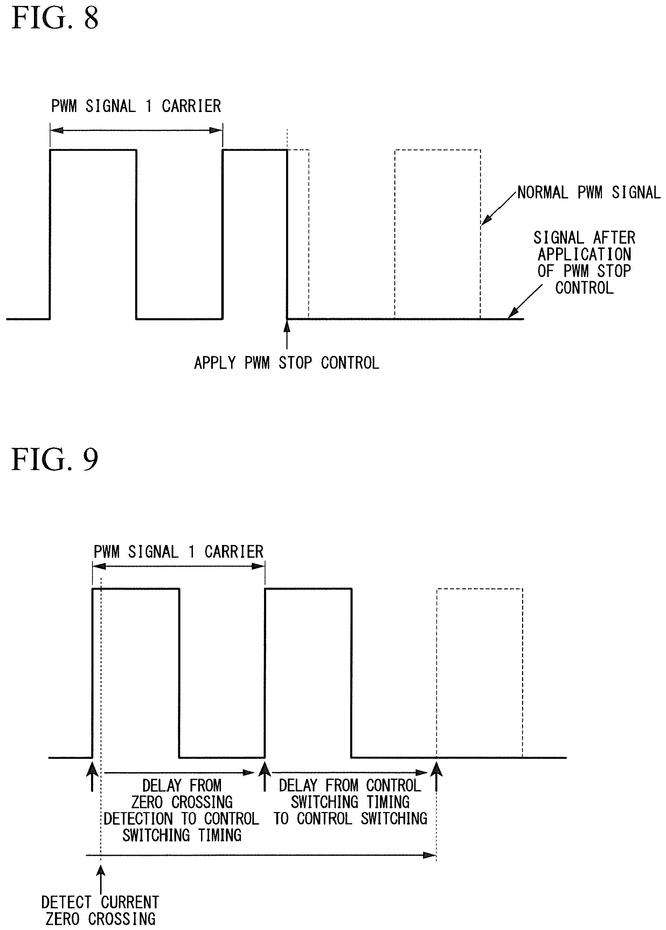

Therefore, as shown in FIG. 8, the PWM signal can be stopped at an arbitrary timing in the pulse signal (carrier signal) of the PWM, and it is possible to perform switching to the PWM stop control without delay.

Therefore, since there is no delay at the time of switching to the PWM stop control, the inverter apparatus 1 can suppress the distortion of the motor output current waveform.

In contrast, the vector control type inverter apparatus as disclosed in Patent Document 1 stops the PWM control pulse signal after detecting the zero crossing of the current. For this reason, as shown in FIG. 9 as a reference example, after the vector control type inverter apparatus detects the zero crossing of the current, switching to the actual PWM stop control is executed with at least one pulse signal (one carrier) of PWM and at most two pulse signals (two carriers) delayed. Therefore, the distortion of the motor output current waveform occurs.

In addition, the inverter apparatus 1 can also perform the switching from the control of the zero voltage range RGZ to the control of the intermediate voltage range RGM as well as the switching from the control (which is the switching control) of the intermediate voltage range RGM to the control (which is the PWM stop control) of the zero voltage range RGZ without delay. Likewise, it is also possible to perform the switching from the control (which is fully-on control) of the intermediate voltage range RGM to control of the peak voltage region RGP, and the switching from the control of the peak voltage region RGP to the control of the intermediate voltage range RGM is also performed, without delay.

In addition, since the inverter apparatus 1 turns on both the switching element of the upper arm and the switching element of the lower arm over a plurality of PWM cycles, respectively, in a region in which each phase voltage of the 3-phase AC voltage is large, the switching loss can be reduced.

In addition, since the inverter apparatus 1 generates the output voltage phase from the speed command, the inverter apparatus 1 can stop the PWM control pulse signal with the phase matching the speed command.

### <Second embodiment>

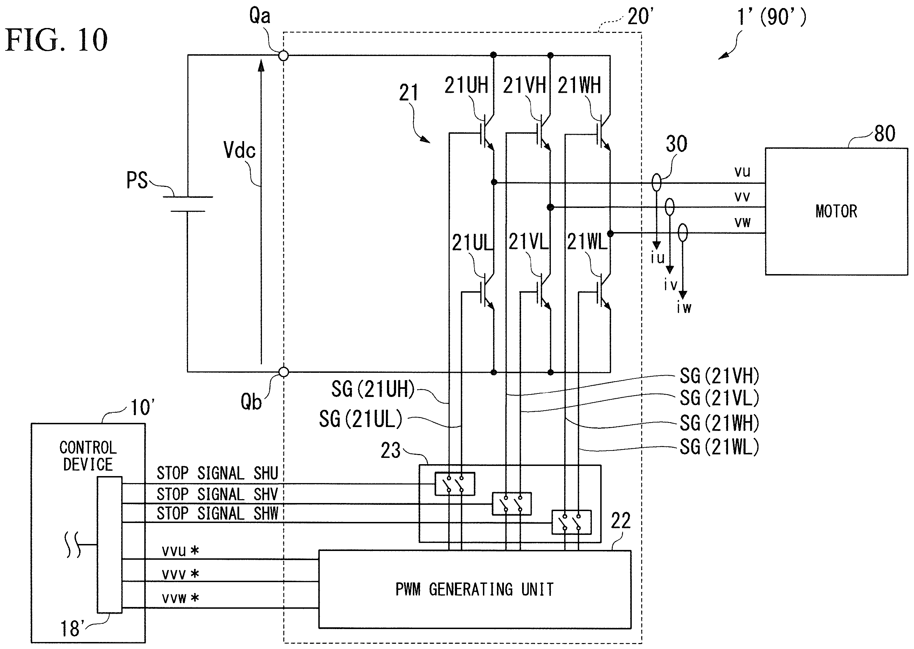

Hereinafter, the inverter apparatus according to the second embodiment will be described in detail with reference to FIG. 10.

The inverter apparatus according to the present embodiment is basically the same as the first embodiment, except that a stop signal for separately stopping the pulse is separately transmitted to the inverter main circuit as a correction command.

An inverter apparatus 1' of the present embodiment is mounted in an outdoor unit of an air conditioner (air conditioning unit) 90'.

As shown in FIG. 10, the inverter apparatus 1' includes a control device 10' having a correction command unit 18' and an inverter main circuit 20' having a pulse stop unit 23.

The correction command unit 18' does not embed a command of stopping the PWM signal but transmits a correction command to the inverter main circuit 20'. That is, the correction command unit 18' separately transmits the corrected AC voltage command and the stop signal for stopping the pulse to the pulse stop unit 23, as the correction commands.

In the present embodiment, the correction command unit 18' transmits the corrected AC voltage commands vvu*, vvv*, and vvw* and the stop signals SHU, SHV, and SHW to the inverter main circuit 20', as the correction commands.

The corrected AC voltage commands vvu*, vvv*, and vvw* are transmitted to the PWM generating unit 22, and the stop signals SHU, SHV, and SHW are transmitted to the pulse stop unit 23.

The pulse stop unit 23 is provided in the wiring between the PWM generating unit 22 and each switching element in series with the PWM generating unit 22 and each switching element. When the off-pulses of the stop signals SHU, SHV, SHW are input, the pulse stop unit 23 stops the PWM signal transmitted from the PWM generating unit 22 to each switching element.

When the stop signal SHU becomes an off-pulse, the pulse stop unit 23 stops the gate signal SG (21UH) and the gate signal SG (21UL).

When the stop signal SHV becomes an off-pulse, the pulse stop unit 23 stops the gate signal SG (21VH) and the gate signal SG (21VL).

When the stop signal SHW becomes an off-pulse, the pulse stop unit 23 stops the gate signal SG (21WH) and the gate signal SG (21WL).

The corrected AC voltage commands vvu*, vvv*, and vvw* can have, for example, the waveform J1. In this case, the stop signals SHU, SHV, and SHW are signals having an off-pulse at the timing of the zero voltage region RGZ of the waveform J1.

The PWM generating unit 22 generates a PWM signal with an on-duty cycle proportional to the voltage at each timing of each waveform (waveform J1) of the corrected AC voltage commands vvu*, vvv*, and vvw*. The PWM generating unit 22 generates each gate signal in synchronization with the PWM signal. The pulse stop unit 23 stops each gate signal generated at the timing of the zero voltage region RGZ.

As a result, a gate signal similar to that of the first embodiment is supplied to each switching element.

Even in this embodiment, the inverter apparatus 1' can stop the PWM signal at an arbitrary timing in the pulse signal (carrier signal) of PWM, and can perform switching to the PWM stop control without delay.

### <Modified Example>

In the first embodiment, the correction command unit 18 corrects the AC voltage commands vu*, vv*, and vw* to the waveform J2. In this case, the correction command unit 18 may correct the AC voltage commands vu*, vv*, and vw* to the waveform J1 and then may correct the waveform J1 to the waveform J2. Alternatively, the correction command unit 18 may correct to the waveform J2 from the AC voltage commands vu*, vv*, and vw* in one process.

In each of the embodiments, in the correction command units 18 and 18', the respective sine waves of the AC voltage commands vu*, vv*, and vw* are raised in the peak voltage region RGP. As a modified example, the voltage command (the δ-axis voltage command vδ* and the γ-axis voltage command vγ*) may be corrected so that the AC voltage commands vu*, vv*, and vw* are raised in the peak voltage region RGP in the voltage command unit 12.

For example, when the γ-axis voltage command vγ* is related to the amplitudes of the AC voltage commands vu*, vv*, and vw*, the γ-axis voltage command vγ* is corrected to a large voltage in the voltage command unit 12. If the γ-axis voltage command vγ* is corrected to a large voltage, since the respective amplitudes of the AC voltage commands vu*, vv*, and vw* can be increased, the amplitudes can be raised at least in the peak voltage region RGP.

In each embodiment, an IGBT is used for the switching element, but as a modified example, an SJ-MOSFET may be used for the switching element.

In the present embodiment, a silicon semiconductor switching element is used, but as a modified example, a switching element of a wide gap semiconductor such as SiC or GaN may be used.

In the present embodiment, as PWM control, the control of turning on both the switching element of the upper arm and the switching element of the lower arm over the entire region of the plurality of cycles of the PWM cycle among the large regions of each phase voltage of the 3-phase AC voltage is performed, as a two-arm type control.

As a modified example, at least one of the switching element of the upper arm and the switching element of the lower arm may be turned on. As another modified example, a correction command that merely stops the pulse signal in the zero voltage region without performing the two arm type control may be generated.

In the first embodiment, the voltages of the corrected AC voltage commands vvu*, vvv*, and vvw* are corrected to 0 in the mask period. However, as a modified example, the voltage may be corrected to a positive value smaller than the voltage of the minimum value of the voltage of the triangular wave waveform.

In the first embodiment, the AC voltage commands vu*, vv*, and vw* are set as corrected AC voltage commands vvu*, vvv*, and vvw*, and are corrected to the waveform J2 having a mask period during which the voltage is set to 0 in the entire zero voltage region RGZ J2, respectively.

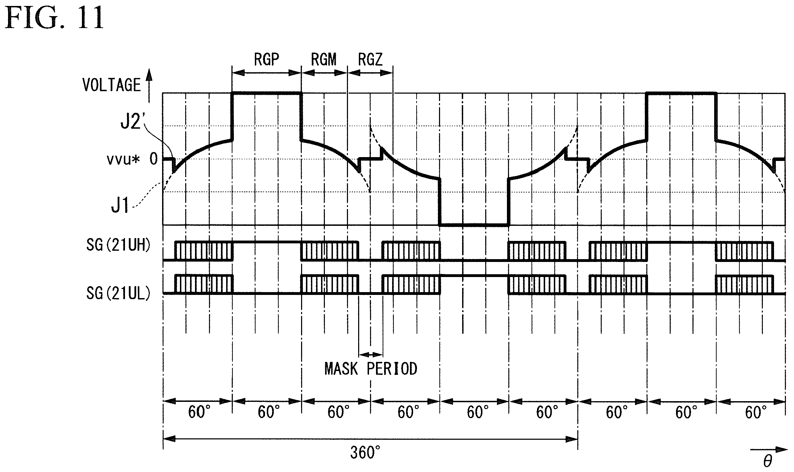

As a modified example, as shown in FIG. 11, the AC voltage commands vu*, vv*, and vw* may be corrected to a waveform J2' having a mask period during which the voltage is set to 0 in a part of the zero voltage region RGZ. In this case, the correction may be performed so that the mask period includes at least the two peaks of ringing, or the correction may be performed so that the mask period includes at least a part of the period of the zero voltage region RGZ.

FIG. 11 shows only an example in which the corrected AC voltage command vvu* is corrected to the waveform J2'. However, the corrected AC voltage commands vvv* and vvw* may also be corrected to the waveform J2' in the same manner.

Further, although the mask period of the waveform J2' is an electrical angle of 30° and is set at the center of the zero voltage region RGZ, the mask period may be set to any electrical angle and position.

### <Method of controlling inverter apparatus>

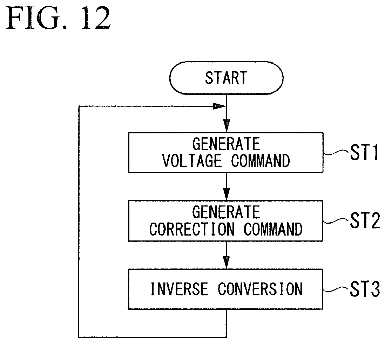

A method of controlling the inverter apparatuses 1 and 1' in each of the above embodiments will be described with reference to FIG. 12.

First, the voltage command unit 12 generates a voltage command, using the speed command of the motor 80 (ST1: voltage command generation step).

Subsequently, at the period of at least a part of the zero voltage region of the voltage command, the correction command units 18 and 18' generate a correction command by adding a command for stopping the PWM control pulse signal to the voltage command (ST2: correction command generation step).

Subsequently, the inverter main circuits 20 and 20' switch the switching element group 21 with the pulse signal generated on the basis of the correction command and thereby convert the DC voltage into the 3-phase AC voltage (ST3: inverse conversion step).

Further, as shown in FIG. 12, the process returns to the voltage command generation step ST1 again, and the processes of ST1 to ST3 are repeated in the same way.

When a termination instruction is input to the inverter apparatus 1 and 1' by the user, the repeated processes of ST1 to ST3 are terminated.

The "voltage command generation step ST1" and the "correction command generation step ST2" of the control method according to the present embodiment are performed by the inverter apparatuses 1 and 1'. However, as a modified example, at least one step of the "voltage command generation step ST1" and the "correction command generation step ST2" may be performed by another apparatus or by a user.

In each of the above-described embodiments, a program for realizing various functions of the control device is recorded in a computer-readable recording medium, and a program recorded in the recording medium is read by a computer system such as a microcomputer and is executed, thereby performing various processes. Here, the procedure of various processes of the CPU of the computer system is stored in a computer readable recording medium in the form of a program, and the computer reads and executes this program, thereby performing the above various processes. Further, the computer-readable recording medium refers to a magnetic disk, a magneto-optical disk, a CD-ROM, a DVD-ROM, a semiconductor memory, or the like. Further, the computer program may be distributed to a computer via a communication line, and the computer receiving the distribution may execute the program.

While several embodiments of the invention have been described, these embodiments are presented by way of example and are not intended to limit the scope of the invention. These embodiments can be implemented in various other forms, and various omissions, substitutions, and changes can be made within the scope that does not depart from the gist of the invention. These embodiments or modified examples thereof are included in the invention described in the claims and the equivalent scope thereof as well as being included in the scope and gist of the invention.

### [Industrial Applicability]

According to an embodiment described above, it is possible to reduce the delay of the PWM signal stop.

### EXPLANATION OF REFERENCES

1 Inverter apparatus
1' Inverter apparatus
10 Control device
10' Control device
11 Speed command unit
12 Voltage command unit
13 2-phase/3-phase conversion unit
14 3-phase/2-phase conversion unit
15 Power factor angle setting unit
16 Speed correction unit
17 Phase calculation unit
18 Correction command unit
18' Correction command unit
20 Inverter main circuit
20' Inverter main circuit
21 Switching element group
21UH Switching element
21UL Switching element
21VH Switching element
21VL Switching element
21WH Switching element
21WL Switching element
22 PWM generating unit
23 Pulse stop unit
30 Motor current detection unit
80 Motor
90 Air conditioner (air conditioning unit)
90' Air conditioner (air conditioning unit)
PS DC power supply
Qa Positive electrode DC terminal
Qb Negative electrode DC terminal

## Claims

1. An inverter apparatus of a 3-phase motor which is configured to perform v/f control, the inverter apparatus comprising:
a voltage command unit which is configured to generate a voltage command on the basis of a speed command of the 3-phase motor;
a correction command unit which is configured to generate a correction command by adding a command of stopping a PWM control pulse signal to the voltage command in a period of at least a part of a zero voltage region of the voltage command; and
an inverter main circuit which is configured to switch a switching element group with a pulse signal generated on the basis of the correction command and thereby convert a DC voltage into a 3-phase AC voltage.

2. The inverter apparatus according to claim 1, wherein the switching element group includes pairs of switching elements of an upper arm and a lower arm in association with each phase of the 3-phase AC voltage, respectively, and
as the PWM control, control of turning on at least one of the switching element of the upper arm and the switching element of the lower arm over the entire region of the plurality of cycles of the PWM cycle among the large regions of each phase voltage of the 3-phase AC voltage is performed.

3. The inverter apparatus according to claim 1 or 2, wherein the switching element group has an SJ-MOSFET or a wide-gap semiconductor as a switching element.

4. The inverter apparatus according to any one of claims 1 to 3, further comprising:
a phase calculation unit which is configured to integrate an inverter output frequency generated from the speed command and calculate the phase,
wherein the correction command unit is configured to generate the correction command based on the phase.

5. An air conditioner comprising:
the inverter apparatus according to any one of claims 1 to 4; and
a motor rotationally driven by the 3-phase AC voltage.

6. A method of controlling an inverter apparatus of a 3-phase motor which is configured to perform v/f control, the method comprising:
a voltage command generation step of generating a voltage command, using a speed command of the 3-phase motor;
a correction command generation step of generating a correction command by adding a command of stopping a PWM control pulse signal to the voltage command in a period of at least a part of a zero voltage region of the voltage command; and
an inverse conversion step of switching a switching element group by the pulse signal generated on the basis of the correction command and thereby converting a DC voltage into a 3-phase AC voltage.

7. A program which is configured to cause a computer of an inverter apparatus including an inverter main circuit configured to convert a DC voltage into a 3-phase AC voltage by switching a switching element group with a pulse signal generated on the basis of a correction command in an inverter apparatus of a 3-phase motor which is configured to perform v/f control, to function as
a voltage command unit which is configured to generate a voltage command using a speed command of the 3-phase motor, and
a correction command unit which is configured to generate the correction command by adding a command of stopping the PWM control pulse signal to the voltage command in a period of at least a part of a zero voltage region of the voltage command.
